# EUROPÄISCHE PATENTSCHRIFT

(11) **EP 4 193 080 B1**
(45) Veröffentlichungstag und Bekanntmachung des Hinweises auf die Patenterteilung: **28.08.2024**
(21) Anmeldenummer: 21748842.8
(22) Anmeldetag: 22.07.2021
(51) Int. Cl.: F16J 1/00, F16J 15/44, F04B 53/00, F02M 59/44, F04B 53/14

(54) **SPALTDICHTUNGSEINRICHTUNG**
GAP SEAL DEVICE
DISPOSITIF DE FERMETURE ÉTANCHE D'ESPACE

(30) Priorität: 07.08.2020 DE 102020120929
(43) Veröffentlichungstag der Anmeldung: 14.06.2023
(73) Patentinhaber: Hammelmann GmbH, 59302 Oelde (DE)
(72) Erfinder: HARTMANN, Felix, 59302 Oelde (DE)
(74) Vertreter: Dantz, Jan Henning
(86) Internationale Anmeldenummer: PCT/EP2021/070517
(87) Internationale Veröffentlichungsnummer: WO 2022/028906

(56) Entgegenhaltungen:
- DE-A1- 102008 041 176

## Beschreibung

Die vorliegende Erfindung betrifft eine Spaltdichtungseinrichtung gemäß dem Oberbegriff des Anspruchs 1.

Eine gattungsgemäße Spaltdichtungseinrichtung ist beispielsweise aus der EP 1 353 096 B1 oder der DE 10 2008 041 176 A1 bekannt.

In dieser Druckschrift wird zur Abdichtung einer sich bewegenden Welle oder Stange im Übergangsbereich zwischen einem Hochdruckbereich und einem Niederdruckbereich eines die Stange führenden Führungsraums eines Gehäuses ein Dichtring eingesetzt, der die Welle oder Stange umschließt, und der mithilfe eine Pressringes durch den im Hochdruckbereich anliegenden Hochdruck partiell verformt wird, so dass durch die Verformung des Dichtrings der Spalt zwischen Dichtring und Welle so weit verkleinert wird, dass dieser nur noch die gewünschte Leckagemenge an Fluid durchlässt.

Eine solche Spaltdichtungseinrichtung hat sich in der Praxis bewährt.

Aufgabe der vorliegenden Erfindung ist es, eine Spaltdichtungseinrichtung bereitzustellen, die ohne einen solchen Dichtring und ohne Pressring auskommt, bei weiterhin geringem Fertigungsaufwand.

Diese Aufgabe wird durch eine Spaltdichtungseinrichtung mit den Merkmalen des Anspruchs 1 gelöst.

Die erfindungsgemäße Spaltdichtungseinrichtung weist ein Gehäuse mit einem fluidgefüllten Führungsraum sowie einen mehrteiligen Kolben auf, der translatorisch und/oder rotatorisch in dem Führungsraum bewegbar ist.

Der Kolben grenzt unter Ausbildung eines Ringspaltes mit einer Nennspaltbreite mit einer den Führungsraum begrenzenden Innenwand des Gehäuses einen Hochdruckbereich von einem Niederdruckbereich des Führungsraumes ab.

Der Kolben weist dabei eine gestufte Stange, eine über einen abgestuften Bereich der Stange übergestülpte Laufbuchse mit einer Sackbohrung und eine Kupplung auf.

Die Stange ist über die Kupplung und die Laufbuchse verspannbar.

Der Hülsenabschnitt der Laufbuchse oder die Stange in ihrem abgestuften Bereich weist wenigstens eine Steifigkeitsänderung, insbesondere in Gestalt einer Materialschwächung auf.

Eine gegenüber der Nennspaltbreite reduzierte Spaltbreite des Ringspalts ist in einem Bereich radial zur Steifigkeitsänderung durch verspannungsbedingtes Aufweiten eines Außendurchmessers des Hülsenabschnitts der Laufbuchse in Abhängigkeit von der eingestellten Spannkraft einstellbar.

Mit einer solchermaßen ausgebildeten Spaltdichtungseinrichtung ist durch Variation der Verspannung der Stange bzw. der Laufbuchse das Spaltmaß des Ringspaltes zur Abdichtung des Hochdruckbereichs vom Niederdruckbereich des Führungsraums in einfacher Weise einstellbar, wodurch die Dichtwirkung der Spaltdichtungseinrichtung bzw. die Menge an Leckage in einfacher Weise variierbar ist.

Vorteilhafte Ausführungsvarianten der Erfindung sind Gegenstand der Unteransprüche.

Die Stange ist zur Aufweitung eines Außendurchmessers des Hülsenabschnitts der Laufbuchse bevorzugt relativ zur Laufbuchse verspannbar.

Gemäß einer ersten bevorzugten Weiterbildung ist die Stange über die Kupplung und die Laufbuchse verspannbar.

Gemäß einer vorteilhaften Ausführungsvariante ist die Stange dazu als Hohlstange mit einer Durchgangsbohrung ausgebildet, in der eine Zugstange aufgenommen ist, wobei die Zugstange durch die Durchgangsbohrung der Hohlstange geführt und die Hohlstange durch Kopplung eines ersten Endes der Zugstange mit der Kupplung und eines zweiten Endes der Zugstange mit der Laufbuchse verspannbar ist.

Die Ausbildung der Stange als Hohlstange mit darin aufgenommener Zugstange ermöglicht in einfacher Weise eine Verspannung der Stange bzw. der Laufbuchse.

Gemäß einer vorteilhaften Weiterbildung weist die Kupplung ein mit einem Innengewinde versehenes Sackloch auf, wobei ein Außengewinde am ersten Ende der Zugstange auf das Innengewinde aufgedreht und durch Rotation um eine Längsachse der Zugstange eine in axialer Richtung wirkende Spannkraft auf die Hohlstange aufgebracht wird.

Dadurch ist durch Drehen der Kupplung in einfacher Weise der Druck auf die Hohlstange und damit das Maß des Ringspalts einstellbar.

Gemäß einer weiteren Ausführungsvariante ist die Steifigkeitsänderung als Materialausnehmung am Innenumfang des abgestuften Bereichs der Hohlstange ausgebildet.

Eine solche Materialausnehmung kann in einfacher Weise in die Hohlstange eingebracht werden.

In einer alternativen Ausführungsvariante ist die Stange als abgestufte Vollstange ausgebildet.

Die Stange kann dabei insbesondere auch einstückig mit der Kupplung ausgebildet sein.

Eine Verspannung der Stange relativ zur Laufbuchse ist auch mit einer solchen Ausführungsvariante möglich.

Zur Verspannung weist dabei in einer bevorzugten Ausführungsvariante die Stange ein mit einem Außengewinde versehenes erstes Ende auf, das in ein Innengewinde der Laufbuchse eingeschraubt ist.

Zur Verspannung mit einer als separates Bauteil ausgebildeten Kupplung weist die Stange bevorzugt ein mit einem Außengewinde versehenes zweites Ende auf, das in ein Innengewinde der Kupplung eingeschraubt ist.

Gemäß einer alternativen Ausführungsvariante ist die Steifigkeitsänderung als Materialausnehmung am Innenumfang des Hülsenabschnitts der Laufbuchse ausgebildet.

Auch dadurch kann die gewünschte Aufweitung des Außendurchmessers in einfacher Weise erreicht werden.

Die Materialausnehmung ist dabei bevorzugt als ringförmige Aussparung ausgebildet und ermöglicht so eine umfänglich gleiche Änderung des Außendurchmessers des Hülsenabschnitts der Laufbuchse.

Gemäß einer weiteren vorteilhaften Ausführungsvariante ist die Laufbuchse relativ zur Zugstange axial zur Längsachse der Zugstange verstellbar.

Dies ermöglicht die Einstellung der Position der Außendurchmesseraufweitung des Hülsenabschnitts der Laufbuchse in Axialrichtung der Zugstange.

Nachfolgend werden bevorzugte Ausführungsbeispiele anhand der beiliegenden Zeichnungen näher erläutert. Es zeigen:
- Figur 1: eine Schnittansicht durch eine Ausführungsvariante einer erfindungsgemäßen Spaltdichtungseinrichtung,
- Figur 2: eine Teilschnittansicht der in Figur 1 dargestellten Spaltdichtungseinrichtung im verspannten Zustand,
- Figur 3: eine der Figur 2 entsprechende Darstellung der Spaltdichtungseinrichtung mit Darstellung des Druckabfalls vor dem aufgeweiteten Bereich des Hülsenabschnitts der Laufbuchse,
- Figur 4: eine Detaildarstellung des in Figur 3 mit IV bezeichneten Ausschnitts unter der zusätzlichen Verformung durch den anstehenden Betriebsdruck,
- Figuren 5 und 6: der Figur 1 entsprechende alternative Ausführungsvariante einer erfindungsgemäßen Spaltdichtungseinrichtung mit Steifigkeitsänderung im Hülsenabschnitt der Laufbuchse, und
- Figuren 7 und 8: nochmals alternative Ausführungsvariante einer erfindungsgemäßen Spaltdichtungseinrichtung mit als Vollstange ausgebildeter Stange.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Spaltdichtungseinrichtung, Gehäuse, Kolben, Stange, Laufbuchse, Kupplung, Zugstange und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

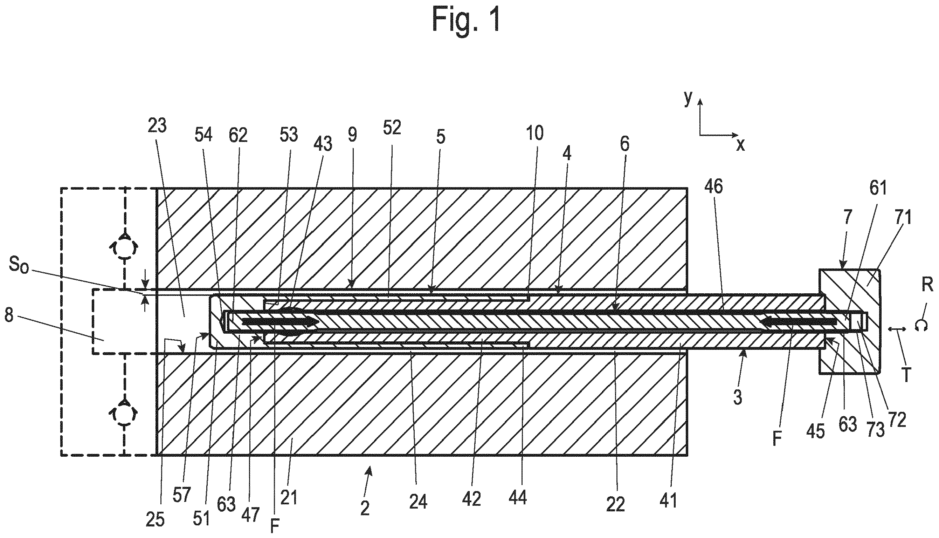

In den Figuren 1 bis 3 ist mit dem Bezugszeichen 2 ein Gehäuse bezeichnet, das einen Fluid gefüllten Führungsraum 22 aufweist, in dem ein mehrteiliger Kolben 3 translatorisch und/oder rotatorisch bewegbar ist.

Das Gehäuse 2 kann dabei als Bestandteil einer oszillierenden Plungerpumpe ausgebildet sein, bei der der Kolben in Längsrichtung L in einer in Figur 1 dargestellten Translationsrichtung T in den Führungsraum 22 oszillierend in einem Arbeitstakt (Saug- und Druckhub) eine oszillierende Bewegung ausführt.

Der Kolben 3 grenzt dabei unter Ausbildung eines Ringspaltes 9 mit einer den Führungsraum 22 begrenzenden Innenwand 25 einen Hochdruckbereich 23 des Führungsraums 22 von einem Niederdruckbereich 24 ab.

Der Kolben 3 ist dabei, wie in Figur 1 dargestellt ist, mehrteilig ausgeführt. Der Kolben 3 weist eine gestufte, hier als Hohlstange ausgebildete Stange 4 mit einer Durchgangsbohrung 46 auf sowie eine über einen abgestuften Bereich 42 der Hohlstange 4 übergestülpte Laufbuchse 5.

Der Außendurchmesser der Laufbuchse 5 entspricht dabei dem Außendurchmesser d_{K} eines Führungsbereiches 41 der Stange 4, während der abgestufte Bereich 42 der Stange 4 in seinem Außendurchmesser so bemessen ist, dass dieser in einem Hülsenabschnitt 52 der Laufbuchse 5 an dessen Innenwand anliegt.

Die Laufbuchse 5 weist des Weiteren eine Sackbohrung 54 im Kopfabschnitt 51 der Laufbuchse 5 auf, die der Aufnahme einer durch die Durchgangsbohrung 46 der Stange 4 geführten Zugstange 6 dient.

Ein erstes Ende 61 dieser Zugstange 6 ist dabei in einer Kupplung 7, dort in einer Sackbohrung 72 aufgenommen. Durch die Kopplung des ersten Endes 61 der Zugstange 6 mit der Kupplung 7 und eines zweiten Endes 62 der Zugstange 6 mit der Laufbuchse 5 ist die Hohlstange 4 durch Annähern der Kupplung 7 an die Laufbuchse 5 verspannbar.

Wie in der in Figur 1 gezeigten Ausführungsvariante dargestellt ist, weist die als Hohlstange ausgebildete Stange 4 in ihrem abgestuften Bereich 42 eine Steifigkeitsänderung, hier in Gestalt einer Materialschwächung 43 auf.

Als Steifigkeitsänderung kann neben der gezeigten Materialschwächung in Gestalt einer gezielten Wegnahme von Material beispielsweise auch ein Materialabschnitt mit kleinerem Elastizitätsmodul verstanden werden.

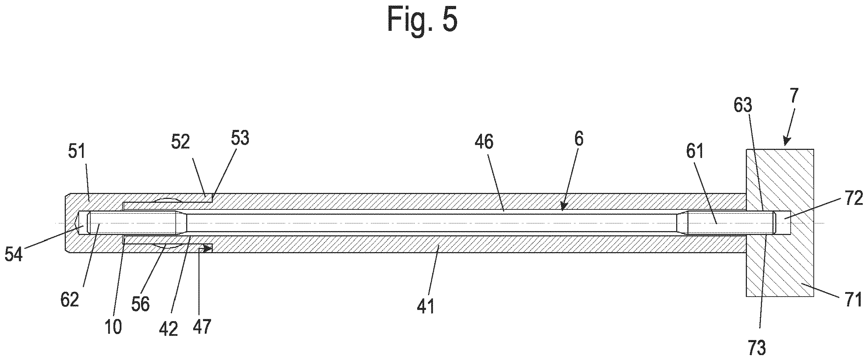

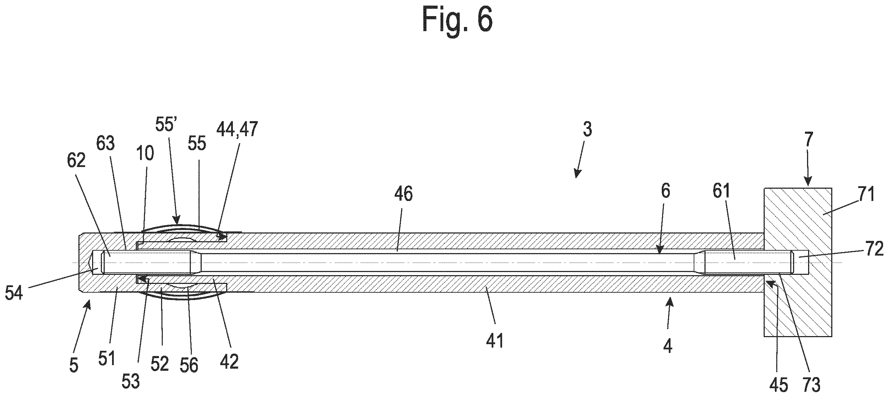

Bei der in den Figuren 5 und 6 gezeigten alternativen Ausführungsvariante weist der Hülsenabschnitt 52 der Laufbuchse 5 eine solche Steifigkeitsänderung 56 auf.

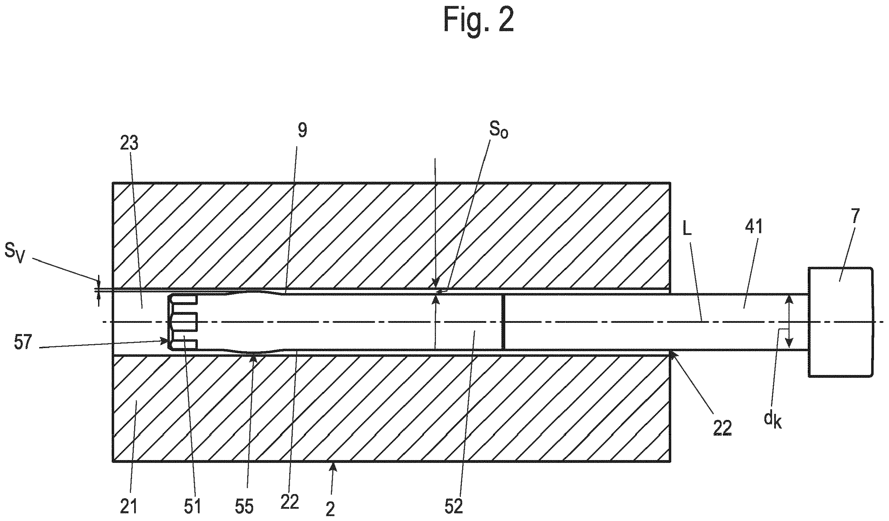

Durch diese Steifigkeitsänderung 43, 56 ist es ermöglicht, dass eine Breite des Ringspaltes 9 in einem Bereich radial zur Steifigkeitsänderung 43, 56 der Hohlstange 4 durch verspannungsbedingtes Aufweiten eines Außendurchmessers des Hülsenabschnitts 52 der Laufbuchse 5 in Abhängigkeit von der eingestellten Spannkraft F von einer Nennspaltbreite S₀ auf eine gegenüber der Nennspaltbreite S₀ reduzierte Spaltbreite Sv einstellbar ist, wie es in Figur 2 dargestellt ist.

Während bei der in Figur 5 und 6 gezeigten Ausführungsvariante der Hülsenabschnitt 52 der Laufbuchse 5 durch Anziehen der Laufbuchse 5 relativ zur Kupplung 7 im Bereich der Steifigkeitsänderung 56 direkt aufgeweitet wird, drückt bei der in den Figuren 1 bis 3 gezeigten Ausführungsvariante der mit der Steifigkeitsänderung 43 versehene abgestufte Bereich 42 der Hohlstange 4 durch die Spannkraft bedingt radial nach außen gegen den Hülsenabschnitt 52 der Laufbuchse 5, was zur Aufweitung des Außendurchmessers des Hülsenabschnitts 52 der Laufbuchse 5 in diesem Bereich führt.

Zur Erzeugung der Verspannung der Hohlstange 4 ist gemäß einer bevorzugten Ausführungsvariante das Sackloch 72 der Kupplung 7 mit einem Innengewinde 73 versehen und so auf ein Außengewinde 63 am ersten Ende 61 der Zugstange 6 aufdrehbar.

Durch Rotation des Kupplungskopfes 71 der Kupplung 7 in einer Rotationsrichtung R um eine Längsachse L der Zugstange 6 kann so der Abstand zwischen dem Kupplungskopf 71 und der Laufbuchse 5 geringfügig verringert werden, was zu einer in axialer Richtung wirkenden Kraft auf die Hohlstange 4 führt, die abhängig von dem zurückgelegtem Drehwinkel des Kupplungskopfes 7 und der Steigung der Gewinde 63, 73 einstellbar ist.

Die in axialer Richtung wirkende Kraft auf die Hohlstange 4 führt dazu, dass die Hohlstange 4 sich verformen muss.

Durch die Ausbildung der Steifigkeitsänderung 43 wird der Ort dieser Verformung sowie die Richtung der Verformung radial nach außen festgelegt.

Diese Verformung radial nach außen führt zu einer Aufweitung des Außendurchmessers des Hülsenabschnitts 52 der Laufbuchse 5, wie sie schematisch in den Figuren 2 dargestellt ist.

Die Zugstange 6 ist im Bereich ihres zweiten Endes 62 bevorzugt ebenfalls mit einem Außengewinde 63 versehen, auf das die Laufbuchse 5 aufschraubbar ist. Dadurch ist die Laufbuchse 5 ebenfalls in axialer Richtung an der Zugstange 6 gehalten.

Die Übertragung der über die Kupplung 7 ausgeübte in axialer Richtung wirkende Kraft erfolgt hier durch eine Innenstirnwand 53 am Kopfabschnitt 51 der Laufbuchse 5, an der eine Andruckfläche 47 des abgestuften Bereichs 42 der Hohlstange 4 anliegt.

Die Stirnfläche des Hülsenabschnitts 52 der Laufbuchse 5 ist durch einen Spalt 10 von der Stufe 44 der Hohlstange 4 im Übergang vom Führungsbereich 41 zum abgestuften Bereich 42 getrennt.

Die Steifigkeitsänderung 43 gemäß der in den Figuren 1 bis 3 gezeigten Ausführungsvariante ist bevorzugt als Materialausnehmung am Innenumfang des abgestuften Bereichs 42 der Hohlstange 4 ausgebildet.

Bei der in den Figuren 5 und 6 gezeigten Ausführungsvariante ist die Steifigkeitsänderung 56 bevorzugt als Materialausnehmung am Innenumfang des Hülsenabschnitts 52 der Laufbuchse 5 ausgebildet.

Die als Materialausnehmung ausgebildete Steifigkeitsänderung 43, 56 ist dabei bevorzugt als ringförmige Aussparung ausgebildet.

Denkbar ist auch, entlang der Längsachse L, wie in Figur 2 dargestellt, mehrere Steifigkeitsänderungen vorzunehmen, um so die Dichtwirkung auf mehrere Druckabbauzonen zu verteilen und den Führungsanteil des Kolbens 3 zu erhöhen.

Gemäß einer weiteren Ausführungsvariante ist die Laufbuchse 5 relativ zur Zugstange 6 axial zur Längsachse L der Zugstange 6 verstellbar.

Die Verformung 55 am Außendurchmesser des Hülsenabschnitts 52 der Laufbuchse 5 ist nach Einstellung der Spannkraft über die Kupplung 7 so eingestellt, dass die Spaltbreite gegenüber einer Nennspaltbreite S₀ so verkleinert ist, dass es im beispielhaften Einsatz der Spaltdichtungseinrichtung in einer oszillierenden Plungerpumpe möglich ist, im Saughub den Hochdruckbereich 23 mit dem Fluid zu befüllen und im Druckhub eine Kompression durchzuführen.

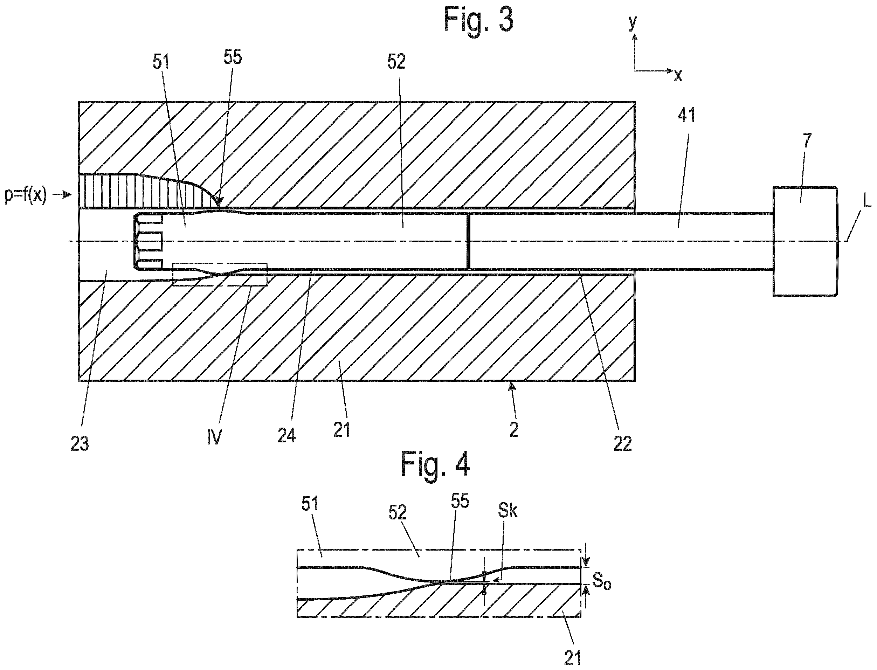

Bei diesem Druckhub erfolgt, wie es in den Figuren 3 und 4 dargestellt ist, zusätzlich eine weitere Verformung des Hülsenabschnitts 52 der Laufbuchse 5, bedingt durch den auf die Stirnfläche 57 der Laufbuchse 5 wirkenden Hochdruck, wodurch der Ringspalt 9 auf eine weiter reduzierte Spaltbreite S_{K} reduziert wird und so die Abdichtung des Fluids im den Hochdruckbereich 23 bildenden Kompressionsraum zusätzlich begünstigt und eine Leckage weiter reduziert wird.

In Figur 3 ist zur Verdeutlichung des Druckabbaus an der Innenumfangsfläche des den Führungsraum 22 begrenzenden Körpers 21 des Gehäuses 2 schematisch ein Druckverlauf p dargestellt, der den auf die Innenfläche des Gehäuses 2 wirkenden, allmählich abfallenden Hochdruck p darstellen soll, der gemäß einer Funktion p = f(x) von der Erstreckung des Spaltes S in Längsrichtung X abhängig ist.

Denkbar ist prinzipiell auch der Einsatz einer solchen Spaltdichtungseinrichtung bei rotierenden Systemen, bei denen der Kolben 3 im Gehäuse 2 rotatorisch bewegt wird und ein unter Druck stehender Raum, hier der Hochdruckbereich 23, gegenüber einem Niederdruckbereich 24 abgedichtet werden muss.

Bei der in den Figuren 5 und 6 gezeigten Ausführungsvariante, bei der die Steifigkeitsänderung 56 am Innenumfang des Hülsenabschnitts 52 der Laufbuchse 5 vorgesehen ist, ist die Andruckfläche 47, gegen die die durch die Kupplung 7 ausgeübte Spannkraft ausgeübt wird, gleich der Stufe 44 der Hohlstange 4 im Übergangsbereich zwischen Führungsbereich 41 und abgestuftem Bereich 42.

Hier ist die Stirnfläche des abgestuften Bereichs 42 der Hohlstange 4 durch einen Spalt 10 von der Innenstirnwand 53 der Laufbuchse 5 beabstandet.

In Figur 6 sind darüber hinaus zwei unterschiedlich große Verformungen 55, 55' dargestellt, wobei die Verformung 55 durch die Verspannung und die Verformung 55' durch die zusätzliche Kompression des unter Hochdruck stehenden Fluids erzeugt ist.

Der Druck beträgt dabei vorzugsweise zwischen 150 bar und 8000 bar, besonders bevorzugt zwischen 1500 bar und 6000 bar. Im Niederdruckbereich 24 steht das Fluid vorzugsweise unter einem Druck von 1 bis 16 bar.

Bedingt durch den Hochdruck im Hochdruckbereich 23, der über einen Hochdruckraum 8 sich in den Führungsraum 22 des Gehäuses 2 erstreckt, führt diese Druckdifferenz zu einer leichten Verformung auch an der Innenseite des Gehäuses 2, wie es in Figur 4 dargestellt ist.

Die Verformung 55 im Hülsenabschnitt 52 der Laufbuchse 5 kann dabei je nach anstehendem Hochdruck so groß sein, dass die Breite des verbleibenden Dichtspaltes S_{K} gegen Null geht und damit eine Leckage des Fluids im Hochdruckzustand in den Niederdruckbereich vollständig oder nahezu vollständig vermieden wird.

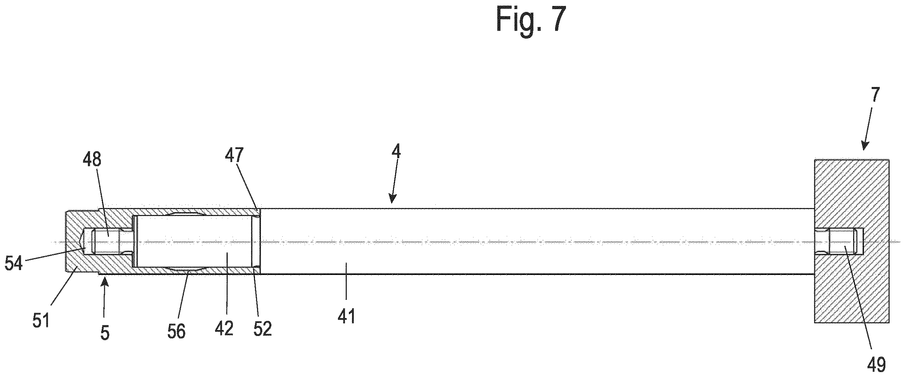

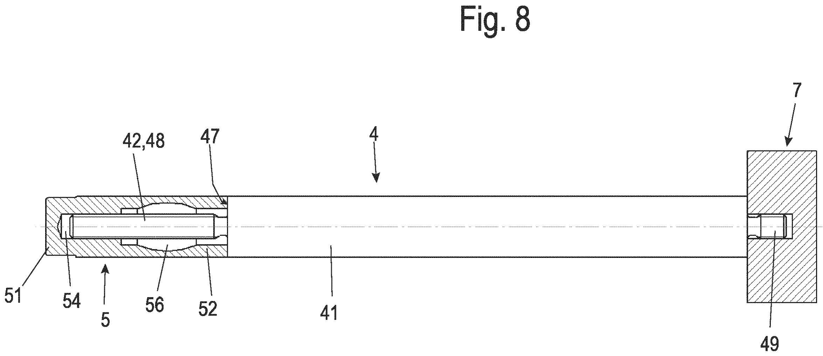

In den Figuren 7 und 8 sind zwei weitere, nochmals alternative Ausführungsvariante einer erfindungsgemäßen Spaltdichtungseinrichtung, in diesem Fall mit als Vollstange bzw. massiv ausgebildeter Stange dargestellt.

Bei diesen Varianten weist die Stange 4 bevorzugt ein mit einem Außengewinde versehenes erstes Ende 48 auf, das in ein Innengewinde der Laufbuchse 5 eingeschraubt ist.

Entsprechend weist die Stange 4 auch ein mit einem Außengewinde versehenes zweites Ende 49 auf, das in das Innengewinde 73 der Kupplung 7 eingeschraubt ist. Denkbar sind auch hier andere Kopplungsausgestaltungen, die ein Verspannen oder Anbinden der Stange 4 in Axialrichtung L ermöglichen.

Die beiden Enden 48, 49 stehen dabei aus einer Stirnfläche des Führungsbereiches 1 der Stange 4 vor und weisen einen gegenüber dem Durchmesser d_{K} des Führungsbereiches 1 geringeren Durchmesser auf.

Bei der in Figur 7 gezeigten Ausführungsvariante liegt eine Außenmantelfläche des von der Laufbuchse 5 ummantelten abgestuften Bereichs 42 bis auf die als Materialausnehmung ausgebildete Steifigkeitsänderung 56 an der Innenfläche des Hülsenabschnitts 52 der Laufbuchse 5 an.

An diesen abgestuften Bereich 42 schließt sich dann das erste Ende 47 der Stange 4 an, das in den Kopfabschnitt 51 der Laufbuchse 5 eingeschraubt ist.

Bei der in Figur 8 gezeigten Ausführungsvariante geht der abgestufte Bereich 42 stufenlos in das erste Ende 47 über, so dass der Hülsenabschnitts 52 der Laufbuchse 5, an dessen Innenmantelfläche die Steifigkeitsänderung 56 ausgebildet ist, die Außenmantelfläche des von der Laufbuchse 5 ummantelten abgestuften Bereichs 42 nicht berührt.

Denkbar ist des Weiteren auch, die Stange einstückig mit der Kupplung auszubilden.

Wichtig ist auch bei diesen Ausführungsvarianten, dass durch die Verspannung der Stange 4 eine erste Verkleinerung der Breite des Ringspaltes 9 von der Nennspaltbreite S₀ auf eine verspannte Spaltbreite Sv ermöglicht ist, die bei Druckbeaufschlagung sich weiter auf eine Spaltbreite S_{K} reduziert.

### Bezugszeichenliste

- 2: Gehäuse
- 21: Körper
- 22: Führungsraum
- 23: Hochdruckbereich
- 24: Niederdruckbereich

- 3: Stange

- 4: Stange
- 41: Führungsbereich
- 42: abgestufter Bereich
- 43: Steifigkeitsänderung
- 44: Stufe
- 45: erste Stirnfläche
- 46: Durchgangsbohrung
- 47: Andruckfläche
- 48: erstes Ende
- 49: zweites Ende

- 5: Laufbuchse
- 51: Kopfabschnitt
- 52: Hülsenabschnitt
- 53: Innenstirnwand
- 54: Sackloch
- 55: Verformung
- 56: Steifigkeitsänderung
- 57: Stirnfläche

- 6: Zugstange
- 61: erstes Ende
- 62: zweites Ende
- 63: Außengewinde

- 7: Kupplung
- 71: Kupplungskopf
- 72: Sackloch
- 73: Innengewinde
- 8: Hochdruckraum
- 9: Ringspalt
- 10: Spalt

- S: Spaltbreite
- S₀: Nennspaltbreite
- Sv: Spaltbreite verspannt
- S_{K}: Spaltbreite verspannt und bei anliegendem Hochdruck
- L: Längsachse
- T: Translationsrichtung
- R: Rotationsrichtung
- X: Richtung
- Y: Richtung
- d_{K}: Durchmesser
- p: Druck

## Patentansprüche

1. Spaltdichtungseinrichtung, aufweisend
ein Gehäuse (2) mit einem fluidgefüllten Führungsraum (22),
einen mehrteiligen Kolben (3), der translatorisch und/oder rotatorisch in dem Führungsraum (22) bewegbar ist,
wobei der Kolben (3) unter Ausbildung eines Ringspaltes (9) mit einer Nennspaltbreite (S₀) mit einer den Führungsraum (22) begrenzenden Innenwand (25) einen Hochdruckbereich (23) von einem Niederdruckbereich (24) des Führungsraumes (22) abgrenzt,
**dadurch gekennzeichnet, dass**
der Kolben (3) eine gestufte Stange (4), eine über einen abgestuften Bereich (42) der Stange (4) übergestülpte Laufbuchse (5) mit einer Sackbohrung (54) und eine Kupplung (7) aufweist,
wobei im abgestuften Bereich (42) der Stange (4) oder einem Hülsenabschnitt (52) der Laufbuchse (5) wenigstens eine Steifigkeitsänderung (43, 56) vorgesehen ist,
wobei eine gegenüber der Nennspaltbreite (S₀) reduzierte Spaltbreite (Sv) des Ringspalts (9) in einem Bereich radial zur Steifigkeitsänderung (43, 56) durch verspannungsbedingtes Aufweiten eines Außendurchmessers des Hülsenabschnitts (52) der Laufbuchse (5) in Abhängigkeit von der eingestellten Spannkraft (F) einstellbar ist.

2. Spaltdichtungseinrichtung nach Anspruch 1, **dadurch gekennzeichnet, dass** die Stange (4) relativ zur Laufbuchse (5) verspannbar ist.

3. Spaltdichtungseinrichtung nach Anspruch 1 oder 2, **dadurch gekennzeichnet, dass** die Stange (4) über die Kupplung (7) und die Laufbuchse (5) verspannbar ist.

4. Spaltdichtungseinrichtung nach Anspruch 3, **dadurch gekennzeichnet, dass** die Stange (4) als Hohlstange mit einer Durchgangsbohrung (46) ausgebildet ist, in der eine Zugstange (6) aufgenommen ist, wobei die Zugstange (6) durch die Durchgangsbohrung (46) der Stange (4) geführt und die Stange (4) durch Kopplung eines ersten Endes (61) der Zugstange (6) mit der Kupplung (7) und eines zweiten Endes (62) der Zugstange (6) mit der Laufbuchse (5) verspannbar ist.

5. Spaltdichtungseinrichtung nach Anspruch 4, **dadurch gekennzeichnet, dass** die Kupplung (7) ein mit einem Innengewinde (73) versehenes Sackloch (72) aufweist, wobei ein Außengewinde (63) am ersten Ende (61) der Zugstange (6) auf das Innengewinde (73) aufgedreht und durch Rotation um eine Längsachse (L) der Zugstange (6) ein in axialer Richtung der Zugstange (6) wirkender Druck auf die als Hohlstange ausgebildete Stange (4) einstellbar ist.

6. Spaltdichtungseinrichtung nach einem der vorstehenden Ansprüche, **dadurch gekennzeichnet, dass** die Steifigkeitsänderung (43) als Materialausnehmung am Innenumfang des abgestuften Bereichs (42) der Stange (4) ausgebildet ist.

7. Spaltdichtungseinrichtung nach einem der Ansprüche 4 bis 6, **dadurch gekennzeichnet, dass** die Laufbuchse (5) relativ zur Zugstange (6) axial zur Längsachse (L) der Zugstange (6) verstellbar ist.

8. Spaltdichtungseinrichtung nach Anspruch 1 oder 2, **dadurch gekennzeichnet, dass** die Stange (4) als abgestufte Vollstange ausgebildet ist.

9. Spaltdichtungseinrichtung nach einem der Ansprüche 1 bis 5 oder 8, **dadurch gekennzeichnet, dass** die Steifigkeitsänderung (56) als Materialausnehmung am Innenumfang des Hülsenabschnitts (52) der Laufbuchse (5) ausgebildet ist.

10. Spaltdichtungseinrichtung nach Anspruch 6 oder 9, **dadurch gekennzeichnet, dass** die Steifigkeitsänderung (43, 56) als ringförmige Aussparung ausgebildet ist.

11. Spaltdichtungseinrichtung nach einem der Ansprüche 8 bis 10, **dadurch gekennzeichnet, dass** die Stange (4) ein mit einem Außengewinde versehenes erstes Ende (48) aufweist, das in ein Innengewinde der Laufbuchse (5) eingeschraubt ist.

12. Spaltdichtungseinrichtung nach einem der Ansprüche 8 bis 11, **dadurch gekennzeichnet, dass** die Stange (4) ein mit einem Außengewinde versehenes zweites Ende (49) aufweist, das in ein Innengewinde (73) der Kupplung (7) eingeschraubt ist.

13. Spaltdichtungseinrichtung nach einem der Ansprüche 8 bis 11, **dadurch gekennzeichnet, dass** die Stange (4) einstückig mit der Kupplung (7) ausgebildet ist.

## Claims

1. Gap seal device, comprising
a housing (2) having a fluid-filled guiding chamber (22),
a multi-part piston (3) which can be moved translationally and/or rotationally in the guiding chamber (22),
wherein the piston (3) separates a high-pressure region (23) from a low-pressure region (24) of the guiding chamber (22), the piston forming an annular gap (9) having a nominal gap width (S₀) with an inner wall (25) delimiting the guiding chamber (22),
**characterized in that**
the piston (3) comprises a stepped rod (4), a sleeve (5) which is slipped over a stepped-down region (42) of the rod (4) and which has a blind hole (54), and a coupling (7),
wherein at least one stiffness change (43, 56) is provided in the stepped-down region (42) of the rod (4) or a tube portion (52) of the sleeve (5),
wherein a gap width (Sv) of the annular gap (9) which is reduced compared to the nominal gap width (S₀) can be set in a region radial to the stiffness change (43, 56) by means of stress-induced expansion of an outer diameter of the tube portion (52) of the sleeve (5) as a function of the set stressing force (F).

2. Gap seal device according to claim 1, **characterized in that** the rod (4) can be stressed relative to the sleeve (5).

3. Gap seal device according to claim 1 or 2, **characterized in that** the rod (4) can be stressed via the coupling (7) and the sleeve (5).

4. Gap seal device according to claim 3, **characterized in that** the rod (4) is formed as a hollow rod with a through bore (46) in which a pull rod (6) is accommodated, wherein the pull rod (6) is guided through the through bore (46) of the rod (4) and the rod (4) can be stressed by coupling a first end (61) of the pull rod (6) to the coupling (7) and a second end (62) of the pull rod (6) to the sleeve (5).

5. Gap seal device according to claim 4, **characterized in that** the coupling (7) has a blind hole (72) provided with an internal thread (73), wherein an external thread (63) at the first end (61) of the pull rod (6) is screwed onto the internal thread (73) and a pressure acting in the axial direction of the pull rod (6) on the rod (4), which is designed as a hollow rod, can be set by rotation about a longitudinal axis (L) of the pull rod (6).

6. Gap seal device according to one of the preceding claims, **characterized in that** the stiffness change (43) is formed as a material recess on the inner circumference of the stepped-down region (42) of the rod (4).

7. Gap seal device according to one of claims 4 to 6, **characterized in that** the sleeve (5) is axially adjustable relative to the pull rod (6) with respect to the longitudinal axis (L) of the pull rod (6).

8. Gap seal device according to claim 1 or 2, **characterized in that** the rod (4) is designed as a stepped-down solid rod.

9. Gap seal device according to one of claims 1 to 5 or 8, **characterized in that** the stiffness change (56) is formed as a material recess on the inner circumference of the tube portion (52) of the sleeve (5).

10. Gap seal device according to claim 6 or 9, **characterized in that** the stiffness change (43, 56) is formed as an annular recess.

11. Gap seal device according to one of claims 8 to 10, **characterized in that** the rod (4) has a first end (48) which is provided with an external thread and is screwed into an internal thread of the sleeve (5).

12. Gap seal device according to one of claims 8 to 11, **characterized in that** the rod (4) has a second end (49) provided with an external thread, which is screwed into an internal thread (73) of the coupling (7).

13. Gap seal device according to one of claims 8 to 11, **characterized in that** the rod (4) is formed integrally with the coupling (7).

## Revendications

1. Dispositif de fermeture étanche d'espace, comprenant
un boîtier (2) avec une chambre de guidage (22) remplie de fluide,
un piston (3) à plusieurs parties déplaçable en translation et/ou en rotation dans la chambre de guidage (22),
le piston (3) séparant une région haute pression (23) d'une région basse
pression (24) de la chambre de guidage (22) en formant un espace annulaire (9) ayant une largeur d'espace nominale (S₀) avec une paroi interne (25) délimitant la chambre de guidage (22),
**caractérisé en ce que**
le piston (3) présente une tige (4) graduée, un manchon (5) ayant un trou borgne (54), enfilé sur une zone étagée (42) de la tige (4), et un accouplement (7),
au moins un changement de rigidité (43, 56) étant prévu dans la zone étagée (42) de la tige (4) ou dans une partie tube (52) du manchon (5),
une largeur d'espace (Sv) de l'espace annulaire (9) réduite par rapport à la largeur d'espace nominale (S₀) étant réglable dans une région radiale par rapport au changement de rigidité (43, 56) au moyen d'une expansion par contrainte d'un diamètre extérieur de la partie tube (52) du manchon (5) en fonction de la force de contrainte définie (F).

2. Dispositif de fermeture étanche d'espace selon la revendication 1, **caractérisé en ce que** la tige (4) est serrable par rapport au manchon (5).

3. Dispositif de fermeture étanche d'espace selon la revendication 1 ou 2, **caractérisé en ce que** la tige (4) est serrable par l'intermédiaire de l'accouplement (7) et du manchon (5).

4. Dispositif de fermeture étanche d'espace selon la revendication 3, **caractérisé en ce que** la tige (4) est réalisée sous forme de tige creuse avec un trou de passage (46) dans laquelle est logée une tige de traction (6), la tige de traction (6) étant guidée à travers le trou de passage (46) de la tige (4) et la tige (4) étant serrable par couplage d'une première extrémité (61) de la tige de traction (6) avec l'accouplement (7) et d'une deuxième extrémité (62) de la tige de traction (6) avec le manchon (5).

5. Dispositif de fermeture étanche d'espace selon la revendication 4, **caractérisé en ce que** l'accouplement (7) présente un trou borgne (72) pourvu d'un filetage intérieur (73), un filetage extérieur (63) étant vissé sur le filetage intérieur (73) à la première extrémité (61) de la tige de traction (6) et une pression agissant dans la direction axiale de la tige de traction (6) sur la tige (4) conçue comme une tige creuse étant réglable par rotation autour d'un axe longitudinal (L) de la tige de traction (6).

6. Dispositif de fermeture étanche d'espace selon l'une des revendications précédentes, **caractérisé en ce que** le changement de rigidité (43) est réalisée sous la forme d'un évidement de matériau sur la périphérie intérieure de la zone étagée (42) de la tige (4).

7. Dispositif de fermeture étanche d'espace selon l'une des revendications 4 à 6, **caractérisé en ce que** le manchon (5) est réglable par rapport à la tige de traction (6), axialement par rapport à l'axe longitudinal (L) de la tige de traction (6).

8. Dispositif de fermeture étanche d'espace selon la revendication 1 ou 2, **caractérisé en ce que** la tige (4) est conçue comme une tige pleine étagée.

9. Dispositif de fermeture étanche d'espace selon l'une des revendications 1 à 5 ou 8, **caractérisé en ce que** le changement de rigidité (56) est réalisé sous la forme d'un évidement de matériau sur la périphérie intérieure de la partie tube (52) du manchon (5).

10. Dispositif de fermeture étanche d'espace selon la revendication 6 ou 9, **caractérisé en ce que** le changement de rigidité (43, 56) est réalisé sous la forme d'un évidement annulaire.

11. Dispositif de fermeture étanche d'espace selon l'une des revendications 8 à 10, **caractérisé en ce que** la tige (4) présente une première extrémité (48) pourvue d'un filetage extérieur, qui est vissée dans un filetage intérieur du manchon (5).

12. Dispositif de fermeture étanche d'espace selon l'une des revendications 8 à 11, **caractérisé en ce que** la tige (4) présente une deuxième extrémité (49) pourvue d'un filetage extérieur, qui est vissée dans un filetage intérieur (73) de l'accouplement (7).

13. Dispositif de fermeture étanche d'espace selon l'une des revendications 8 à 11, **caractérisé en ce que** la tige (4) est réalisée d'une seule pièce avec l'accouplement (7).
